# EUROPEAN PATENT APPLICATION

(11) **EP 3 993 479 A1**
(43) Date of publication of application: **04.05.2022**
(21) Application number: 21797566.3
(22) Date of filing: 26.04.2021
(51) Int. Cl.: H04W 16/32, H04W 64/00, H04W 72/04, H04W 76/12, H04W 76/15

(54) **UE, AF DEVICE, SMF DEVICE, AND METHOD FOR SAME**

(30) Priority: 27.04.2020 JP 2020078449
(71) Applicant: NEC Corporation, 108-8001 Tokyo (JP)
(72) Inventor: TAMURA Toshiyuki, Tokyo 108-8001 (JP); OKABE Junya, Tokyo 108-0073 (JP); CHIBA Kazuhiro, Tokyo 108-0073 (JP); SHIMIZU Kouji, Tokyo 108-0073 (JP); NAKAGAWA Tomoki, Tokyo 108-0073 (JP); AOKI Takahiro, Tokyo 108-0073 (JP)
(74) Representative: MacDougall, Alan John Shaw
(86) International application number: PCT/JP2021/016665
(87) International publication number: WO 2021/221019

(57) **Abstract**

A User Equipment (UE) (3) includes, in a Non-Access Stratum (NAS) message requesting establishment or modification of a protocol data unit (PDU) session, one or both of a first identifier representing a candidate secondary cell (12) for dual connectivity and a second identifier representing a frequency band in which the candidate secondary cell operates. The UE (3) sends the NAS message to a core network (30) via a radio access network (10). This can, for example, allow a radio communication network to provide a UE with a user plane path that includes a radio connection in a specific secondary cell of dual connectivity based on a request from the UE or an application function.

## Description

### Technical Field

This disclosure relates to radio communication networks, and in particular to control of user plane paths.

### Background Art

Patent Literature 1 discloses a handover of a mobile terminal from a macrocell to a small cell in order to enable the mobile terminal to use a special service that is provided only in a particular small cell. In one example disclosed in Patent Literature 1, a mobile terminal camps on a macrocell provided by a radio base station (hereinafter referred to as a macrocell base station) and sends a service establishment request for requesting establishment of a specific service to a core network node via the macrocell base station. The core network node is, for example, a Serving GPRS Support Node (SGSN) or a Mobility Management Entity (MME). In response to the reception of the service establishment request from the mobile station, the core network node requests the macrocell base station to establish the requested specific service. The macrocell base station manages a table that indicates which type of specific service is provided in each of the multiple small cells. The macrocell base station selects a small cell associated with the requested specific service based on the table, and determines whether or not the mobile terminal can be handed over to the selected small cell. This judgment is made, for example, based on whether or not the macrocell base station is receiving a signal of a predetermined strength or higher from the mobile terminal. If the macrocell base station determines that the mobile station can be handed over to the selected small cell, it sends a response indicating the failure of service establishment to the core network node and hands over the mobile station to the selected small cell. After the completion of the handover, the radio base station providing the small cell (hereinafter referred to as the small cell base station) notifies the core network node of the completion of the handover. After the completion of the handover, the core network node requests the small cell base station to establish the specific service.

In another example disclosed in Patent Literature 1, the above-described table is managed by a core network node (e.g., SGSN or MME) instead of a macrocell base station. Specifically, in response to the reception of a service establishment request from a mobile terminal via a macrocell base station, the core network node refers to the table associated with the macrocell base station, selects a small cell associated with the requested specific service, and determines whether or not the mobile terminal can be handed over to the selected small cell. This judgment is made, for example, based on whether or not the macrocell base station is receiving a signal of a predetermined strength or higher from the mobile terminal. In the case where the core network node determines that the mobile terminal can be handed over to the selected small cell, it requests the macrocell base station to perform the handover. In response to the handover request from the core network node, the macrocell base station hands over the mobile station from the macrocell to the small cell. After the handover is completed, the small cell base station notifies the core network node of the handover completion. After the completion of the handover, the core network node requests the small cell base station to establish the specific service.

On the other hand, Non-Patent Literature 1 (e.g., Section 5.6.7) and Non-Patent Literature 2 (e.g., Section 4.3.6) disclose Application Function (AF) influence on traffic routing. The AF influence on traffic routing is a control plane solution that enables an AF to provide input to the 5G Core Network (5GC) on how certain traffic should be routed. More specifically, the AF sends requests to the 5GC to influence the routing decisions made by the Session Management Function (SMF) regarding the traffic (i.e., one or more QoS Flows) of a Protocol Data Unit (PDU) session. For example, AF requests affect the User Plane Function (UPF) selection by the SMF, allowing it to route user traffic to local access to the Data Network (DN) identified by the DN Access Identifier (DNAI). The UPF selection by the SMF includes the insertion of a UL Classifier (ULCL) UPF or Branching Point (BP) UPF into the User Plane (UP) path of the PDU session.

### Citation List

### Patent Literature

[Patent Literature 1] WO 2014/013646 A

### Non Patent Literature

[Non-Patent Literature 1] 3GPP TS 23.501 V16.3.0 (2019-12) "3rd Generation Partnership Project; Technical Specification Group Services and System Aspects; System Architecture for the 5G System (5GS); Stage 2 (Release 16)", December 2019
[Non-Patent Literature 2] 3GPP TS 23.502 V16.3.0 (2019-12) "3rd Generation Partnership Project; Technical Specification Group Services and System Aspects; Procedures for the 5G System (5GS); Stage 2 (Release 16)", December 2019

### Summary of Invention

### Technical Problem

The 5G system supports millimeter wave frequency bands from 4.25 GHz to 52.6 GHz, in addition to the frequency bands below 6 GHz (sub-6 GHz) used in Long Term Evolution (LTE). The sub-6 GHz frequency bands are referred to as Frequency Range 1 (FR1) and the millimeter wave frequency bands are referred to as Frequency Range 2 (FR2). The FR2 band allows 5G Next Radio (NR) devices to exchange data over a wider carrier bandwidth and achieve very low scheduling latencies. However, considering the propagation characteristics of millimeter waves, FR2 cells will be local or small cells placed inside a FR1 cell.

The inventors have considered improvements to allow a radio terminal (hereinafter referred to as User Equipment (UE)) to quickly initiate communication in a local cell (e.g., FR2 cell). For example, if the UE can request the network to add a specific cell (e.g., FR2 cell) as a Secondary Cell (Secondary Cell Group (SCG) cell) for dual connectivity, this may contribute to an improved user experience. Alternatively, if an application server (or a control server in cooperation therewith) can request the radio communication network (e.g., 5G system) to add a specific cell (e.g., FR2 cell) as an SCG cell in dual connectivity for the UE, this may contribute to improving the user experience.

Patent Literature 1 does not provide any disclosure about dual connectivity and does not disclose that the UE requests the network for dual connectivity. On the other hand, the AF influence on traffic routing described in Non-Patent Literature 1 and 2 allows an AF to request the core network to change a UP path. However, Non-Patent Literature 1 and 2 do not disclose a procedure for the AF to request the core network to provide dual connectivity to the UE.

One of the objects to be attained by embodiments disclosed herein is to provide apparatuses, methods, and programs that contribute to enabling a radio communication network to provide a UP path including a radio connection in a specific secondary cell of dual connectivity to a UE based on a request from the UE or an application function (AF). It should be noted that this object is merely one of the objects to be attained by the embodiments disclosed herein. Other objects or problems and novel features will be made apparent from the following description and the accompanying drawings.

### Solution to Problem

In a first aspect, a User Equipment (UE) includes at least one memory and at least one processor coupled to the at least one memory. The at least one processor is configured to include, in a Non-Access Stratum (NAS) message requesting establishment or modification of a protocol data unit (PDU) session, one or both of a first identifier representing a candidate secondary cell for dual connectivity and a second identifier representing a frequency band in which the candidate secondary cell operates. The at least one processor is further configured to send the NAS message to a core network via a radio access network (RAN).

In a second aspect, an Application Function (AF) apparatus includes at least one memory and at least one processor coupled to the at least one memory. The at least one processor is configured to include, in a first message, one or both of a first identifier representing a candidate secondary cell for dual connectivity for a User Equipment (UE) and a second identifier representing a frequency band in which the candidate secondary cell operates. The at least one processor is further configured to send the first message to a core network.

In a third aspect, a Session Management Function (SMF) apparatus includes at least one memory and at least one processor coupled to the at least one memory. The at least one processor is configured to receive from a Policy Control Function (PCF) a second message that is based on a request from an Application Function (AF). The at least one processor is configured to, in response to the second message from the PCF, request a radio access network (RAN) via an Access and Mobility management Function (AMF) to set up or modify a user plane path in such a way that user data belonging to a protocol data unit (PDU) session for a User Equipment (UE) is transferred via the user plane path including a radio connection of a secondary cell in dual connectivity.

In a fourth aspect, a method performed by a User Equipment (UE) includes the steps of:
(a) including, in a Non-Access Stratum (NAS) message requesting establishment or modification of a protocol data unit (PDU) session, one or both of a first identifier representing a candidate secondary cell for dual connectivity and a second identifier representing a frequency band in which the candidate secondary cell operates; and
(b) sending the NAS message to a core network via a radio access network (RAN).

In a fifth aspect, a method performed by an Application Function (AF) apparatus includes the steps of:
(a) including, in a first message, one or both of a first identifier representing a candidate secondary cell for dual connectivity for a User Equipment (UE) and a second identifier representing a frequency band in which the candidate secondary cell operates; and
(b) sending the first message to a core network.

In a sixth aspect, a method performed by a Session Management Function (SMF) apparatus includes the steps of:
(a) receiving from a Policy Control Function (PCF) a second message that is based on a request from an Application Function (AF); and
(b) in response to the second message from the PCF, requesting a radio access network (RAN) via an Access and Mobility management Function (AMF) to set up or modify a user plane path in such a way that user data belonging to a protocol data unit (PDU) session for a User Equipment (UE) is transferred via the user plane path including a radio connection of a secondary cell in dual connectivity.

In a seventh aspect, a program includes instructions (software codes) that, when loaded into a computer, cause the computer to perform the method according to the above-described fourth, fifth, or sixth aspect.

### Advantageous Effects of Invention

According to the above-described aspects, it is possible to provide apparatuses, methods, and programs that contribute to enabling a radio communication network to provide a UP path including a radio connection in a specific secondary cell of dual connectivity to a UE based on a request from the UE or an application function (AF).

### Brief Description of Drawings

Figure 1 shows a configuration example of a radio communication network according to an embodiment;
Figure 2 is a flowchart showing an example of operation of a UE according to an embodiment;
Figure 3 is a flowchart showing an example of operation of an application function according to an embodiment;
Figure 4 is a sequence diagram showing an example of signaling according to an embodiment;
Figure 5 is a sequence diagram showing an example of signaling according to an embodiment;
Figure 6A shows an example of a user plane path before dual connectivity is performed;
Figure 6B shows an example of a user plane path after dual connectivity is initiated;
Figure 6C shows an example of a user plane path after dual connectivity is initiated;
Figure 7 is a sequence diagram showing an example of signaling according to an embodiment;
Figure 8 is a flowchart showing an example of operation of an application function according to an embodiment;
Figure 9 is a flowchart showing an example of operation of an application function according to an embodiment;
Figure 10 is a sequence diagram showing an example of signaling according to an embodiment;
Figure 11 is a sequence diagram showing an example of signaling according to an embodiment;
Figure 12 shows an example of a user plane path after dual connectivity is initiated;
Figure 13 is a block diagram showing a configuration example of a RAN node according to an embodiment;
Figure 14 is a block diagram showing a configuration example of a UE according to an embodiment; and
Figure 15 is a block diagram showing a configuration example of an application function according to an embodiment.

### Description of Embodiments

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3rd Generation Partnership Project (3GPP) fifth generation mobile communication system (5G system (5GS)). However, these embodiments may be applied to other radio communication systems (e.g., LTE systems).

### First Embodiment

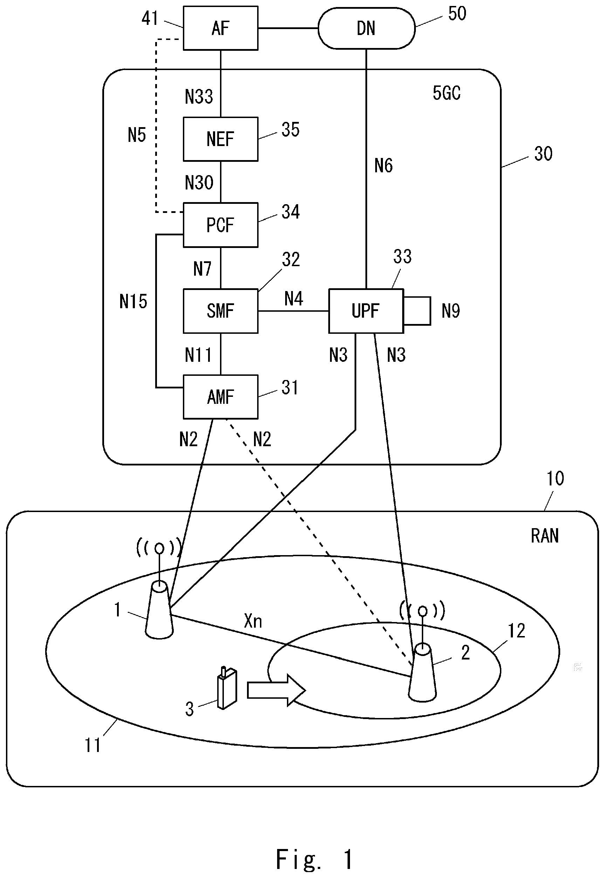

Figure 1 shows a configuration example of a several embodiments, including this embodiment. Each of the elements shown in Figure 1 is a network function and provides an interface as defined by the 3rd Generation Partnership Project (3GPP). Each of the elements (network functions) shown in Figure 1 can be implemented, for example, as a network element on dedicated hardware, as a software instance running on dedicated hardware, or as a virtual function instantiated on an application platform.

The radio communication network shown in Figure 1 may be provided by a Mobile Network Operator (MNO), or it may be a Non-Public Network (NPN) provided by a non-MNO. If the radio communication network shown in Figure 1 is an NPN, it may be an independent network, represented as a Stand-alone Non-Public Network (SNPN), or it may be an NPN linked to an MNO network, represented as a public network integrated NPN.

In the example shown in Figure 1, the radio communication network includes a Radio Access Network (RAN) 10, a 5G Core Network (5GC) 30, and an Application Function (AF) 41. The RAN 10 includes RAN nodes 1 and 2. The 5GC 30 includes an Access and Mobility Management Function (AMF) 31, a Session Management Function (SMF) 32, a User Plane Function (UPF) 33, a Policy Control Function (PCF) 34, and a Network Exposure Function (NEF) 35.

Each of the RAN nodes 1 and 2 may be a gNB or a ng-eNB. The RAN nodes 1 and 2 may be Central Units (e.g., gNB-CUs) in cloud RAN (C-RAN) deployment. The RAN node 1 terminates a Control Plane (CP) interface (i.e., N2 interface) with the 5GC 30 and interworks with the AMF 31 in the 5GS 30 over that CP interface. In some implementations, the RAN node 2 may also terminate a CP interface (i.e., N2 interface) with the 5GC 30 and interwork with the AMF 31 on that CP interface. In other implementations, the RAN node 2 may not have a CP interface with any AMF. For example, if the RAN node 2 is responsible for only a secondary node (SN) in Dual Connectivity (DC) in non-standalone deployment, then the RAN node 2 does not need to have a CP interface with 5GC 30.

The RAN node 1 provides one or more cells, including a cell 11, while the RAN node 2 provides one or more cells, including a cell 12. The cell 11 may operate in a different frequency band than the cell 12. For example, the cell 11 may operate in one of the sub-6 GHz frequency bands in FR1, while the cell 12 may operate in one of the millimeter wave frequency bands in FR2. As shown in Figure 1, the cell 12 in the higher frequency band may be a local cell (small cell) located within the cell 11 in the lower frequency band. The cell 11 may completely cover the cell 12 or may partially overlap with the cell 12.

The AMF 31 is one of the network functions in the 5GC control plane. The AMF 31 provides the termination of a RAN CP interface (i.e., the N2 interface). The AMF 31 terminates a single signalling connection (i.e., N1 Non-Access Stratum (NAS) signalling connection) with the UE 3 and provides registration management, connection management and mobility management. In addition, the AMF 31 provides NF services over a service based interface (i.e., Namf interface) to NF consumers (e.g., other AMFs, SMF 32 and Authentication Server Function (AUSF)). Furthermore, the AMF 31 uses NF services provided by other NFs (e.g., Unified Data Management (UDM), Network Slice Selection Function (NSSF), and PCF 34).

The SMF 32 is one of the network functions in the 5GC control plane. The SMF 32 manages PDU sessions. The SMF 32 sends and receives SM signalling messages (NAS-SM messages) to and from the Non-Access-Stratum (NAS) Session Management (SM) layer of the UE 3 via communication services provided by the AMF 31. The SMF 32 provides NF services on a service-based interface (i.e., Nsmf interface) to NF consumers (e.g., AMF 31, other SMFs). The NF services provided by the SMF 32 include a PDU session management service (Nsmf_PDUSession), which allows the NF consumer (e.g., AMF 31) to handle PDU sessions. The SMF 32 may be an Intermediate SMF (I-SMF). The I-SMF is inserted between the AMF 31 and an original SMF as needed when the UPF 33 belongs to a different SMF service area and cannot be controlled by the original SMF.

The UPF 33 is one of the network functions in the 5GC user plane. The UPF 33 processes and forwards user data. The functionality of the UPF 33 is controlled by the SMF 32. The UPF 33 is interconnected with a data network (DN) 50 and acts as an anchor point towards the DN 50 for one or more PDU sessions of the UE 3. The UPF 33 may include a plurality of UPFs interconnected via N9 interfaces. More specifically, the UP path for a PDU session of the UE 3 may include one or more PDU Session Anchor (PSA) UPFs, may include one or more Intermediate UPFs (I-UPFs), and may include one or more Uplink Classifier (UL CL) UPFs (or Branching Point (BP) UPFs).

The PCF 34 provides a variety of policy controls, including policy controls for session management related functions and access and mobility related functions. For example, the PCF 34 interacts with the AF 41 directly (via an N5 interface) or via an NEF 35, and with the SMF 32 (via an N7 interface), for session management related policy control.

The NEF 35 has a role similar to Service Capability Exposure Function (SCEF) of the Evolved Packet System (EPS). Specifically, the NEF 35 supports the exposure of services and capabilities from the 5G system to applications and network functions inside and outside the operator network.

The radio terminal (i.e., UE) 3 uses 5G connectivity services to communicate with the data network (DN) 50. More specifically, the UE 3 is connected to the RAN 10 and communicates with the DN 50 in the application layer via the UPF 33 in the 5GC 30. The term "application layer" in this specification refers to all protocol layers above the PDU session (PDU session layer) between the UE 3 and the DN 50 provided by the 5GS. For example, if the PDUs are IP packets, the application layer includes not only application protocols such as Hypertext Transfer Protocol (HTTP) and File Transfer Protocol (FTP), but also transport layer protocols (e.g., User Datagram Protocol (UDP) and Transmission Control Protocol (TCP)) between the IP and the application protocols.

The AF 41 interacts with the PCF 34 to request the 5GC 30 to take policy control related to the PDU session of the UE 3. As described above, the AF 41 interacts with the PCF 34 either directly or via the NEF 35. In addition, in the example of Figure 1, the AF 41 can communicate with an application (UE application) running on the processor of the UE 3 via the DN 50 (e.g., the internet, or other IP network) and the PDU session between the DN 50 and the UE 3. The AF 41 may include one or more computers. For example, the AF 41 may include one or more servers (e.g., content delivery servers, online game servers) that communicate with the UE 3 in the application layer, and a controller (i.e., the AF in the 3 GPP definition) that works with these one or more servers and interacts with the 5GC 30 (e.g., PCF 34). In addition, the AF 41 may include a plurality of servers deployed in distributed locations. For example, the AF 41 may include, in addition to a central server, one or more edge computing servers located near the RAN 10. The edge computing servers and the local UPFs, which provide steering of user plane traffic for local access to the edge computing servers, may be collocated with any of the RAN nodes or may be co-located at a network aggregation site between the RAN 10 and the CN 30.

The configuration example in Figure 1 shows only typical NFs for convenience of explanation. The radio communication network may include other NFs that are not shown in Figure 1.

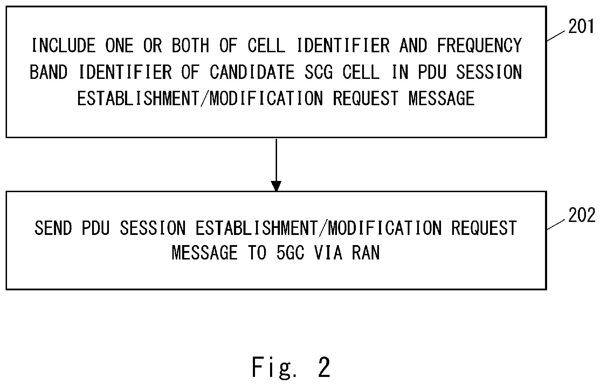

Figure 2 shows an example of the operation of the UE 3 according to this embodiment. In step 201, the UE 3 generates a NAS message requesting establishment or modification of a PDU session. The NAS message may be a PDU Session Establishment Request message or a PDU Session Modification Request message. In this case, the UE 3 includes in the NAS message one or both of a cell identifier of a candidate secondary cell (SCG cell) for dual connectivity and a frequency band identifier indicating the frequency band in which the candidate SCG cell operates. The cell identifier may be a Physical Cell ID (PCI). The frequency band identifier may be NR Absolute Radio Frequency Channel Numbers (NR-ARFCN). In step 202, the UE 3 sends the generated NAS message to the 5GC 30 via the RAN 10.

The NAS message causes the 5GC 30 to set up or modify a UP path to ensure that the user data belonging to the PDU session of the UE 3 is transferred via that UP path including a radio connection (e.g., data radio bearer (DRB)) of the candidate SCG cell specified by the UE 3. In other words, in response to the NAS message from the UE 3, the 5GC 30 and the RAN 10 set up or modify the UP path in such a way that the user data belonging to the PDU session of the UE 3 is forwarded via the UP path including the radio connection (e.g., DRB) of the specific SCG cell in dual connectivity. The user data belonging to the PDU session of the UE 3 may be one or more Quality of Service (QoS) flows.

If the request from the UE 3 is to establish a new PDU session, the UP path of one or more QoS flows belonging to the newly established PDU session is set up as described above. On the other hand, if the request from the UE 3 is to modify a PDU session, the UP path of one or more QoS flows belonging to the established PDU session is set up or modified as described above.

The UP path includes an N3 tunnel between the UPF 33 (specifically PSA UPF) in the 5GC 30 and the RAN 10 (specifically RAN node 1 or 2), and a radio connection (DRB) between the RAN 10 (specifically RAN node 1 or 2) and the UE 3. If multiple UPFs are used for the PDU session, the UP path may also include one or more N9 tunnels between the UPFs. The N3 and N9 tunnels may be General Packet Radio Service (GPRS) Tunnelling Protocol for User Plane (GTP-U) tunnels.

Dual connectivity allows a UE to simultaneously use the Master Cell Group (MCG) provided by the Master Node (MN) (e.g., RAN node 1) and a Secondary Cell Group (SCG) provided by a Secondary Node (SN) (e.g., RAN node 2). The MCG is a group of serving cells associated with (or provided by) a RAN node (e.g., RAN Node 1) acting as the MN of DC, and includes SpCell (i.e., Primary Cell (PCell)) and optionally one or more Secondary Cells (SCells). Meanwhile, the SCG is a group of serving cells associated with (or provided by) a RAN node (e.g., RAN node 2) acting as an SN of DC, and includes the primary cell of the SCG and optionally one or more Secondary Cells (SCells). The primary cell of the SCG is referred to as Primary SCG cell (PSCell) or Primary Secondary Cell (PSCell). The PSCell is the Special Cell (SpCell) of the SCG.

The UE 3 may receive the cell identifier or the frequency band identifier or both of the candidate secondary cell from the AF 41. The UE 3 may receive these from the AF 41 via communication in the application layer. Alternatively, the UE 3 may receive these from the AF 41 via a device trigger message. The device trigger message reaches the UE via the 5GC 30 and RAN 10 based on a request of the AF 41.

The procedure in Figure 2 allows the 5GC 30 and RAN 10 to provide the UE 3 with a UP path containing a radio connection of a specific secondary cell (SCG cell) in DC based on a request from the UE 3.

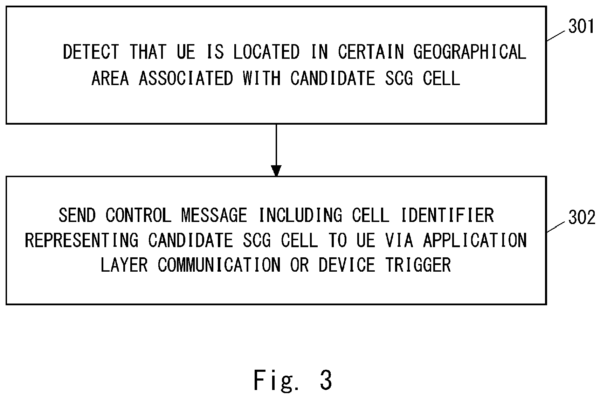

Figure 3 shows an example of the operation of the AF 41 according to this embodiment. In step 301, the AF 41 detects that the UE 3 is located in a certain geographical area associated with a candidate SCG cell (e.g., FR2 cell, cell 12). The certain geographical area may be a larger area compared to the coverage area of the candidate SCG cell. Alternatively, the certain geographical area may be an area that a user would definitely pass through before reaching the location of the candidate SCG cell. Thus, it can be said that the AF 41 determines that the UE 3 is approaching the candidate SCG cell.

In some implementations, the AF 41 may receive a report indicating the current location of the UE 3 from the UE 3 via application layer communication and determine whether the UE 3 is located in the certain geographical area based on the report. The UE 3 may, for example, send Global Positioning System (GPS) location information to the AF 41.

In step 302, in response to the detection in step 301, the AF 41 sends a control message including a cell identifier representing the candidate SCG cell to the UE 3 via application layer communication or device trigger. As previously described, the AF 41 may send to the UE 3, instead of or in addition to the cell identifier representing the candidate SCG cell, an identifier of the frequency band in which the candidate SCG cell operates.

The UE 3 may initiate the operation shown in Figure 2 in response to the reception of one or both of the cell identifier and the frequency band identifier of the candidate SCG cell in step 302. This may, for example, allow the UE 3 to request the 5GC 30 to prepare for dual connectivity using the candidate SCG cell before the UE 3 actually receives the radio signal of the candidate SCG cell. Such an operation can reduce the delay required for the UE 3 to transmit or receive user data in the candidate SCG cell when the UE 3 is able to receive radio signals from that cell.

The UE 3 may receive in advance from the AF 41 one or both of the cell identifier and the frequency band identifier of the candidate SCG cell. Furthermore, the UE 3 may receive in advance from the AF 41 the information indicating the certain geographical area described above. In this case, the UE 3 may determine whether the UE 3 is located in the certain geographical area, and if the UE 3 is located in the certain geographical area, the UE 3 may initiate the operation shown in Figure 2.

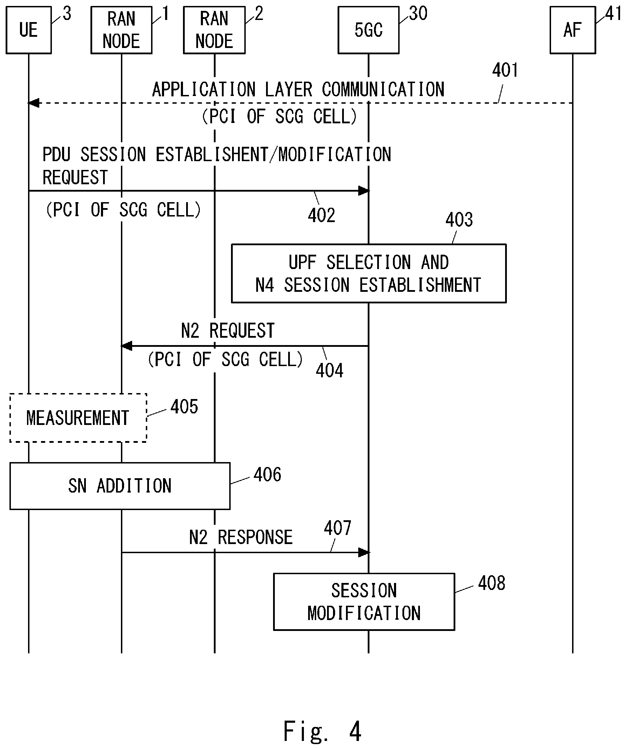

Figure 4 shows an example of the signaling in this embodiment. According to the procedure in Figure 4, in response to a NAS message from the UE 3 requesting the establishment or modification of a PDU session, the 5GC 30 and the RAN 10 set up or modify a UP path in such a way that the user data belonging to the PDU session of the UE 3 is transferred via that UP path including a radio connection of a specific SCG cell of dual connectivity.

The procedure shown in Figure 4 is initiated (or triggered) by the UE 3 when the UE 3 camps on the cell 11 (e.g., FR1 macrocell) provided by the RAN node 1. The UE 3 requests the 5GC 30 to set up or modify the UP path to ensure that the traffic (i.e., one or more QoS flows) belonging to the PDU session of the UE 3 passes through the specific SCG cell 12 (e.g., FR2 local cell) provided by the RAN node 2.

In step 401, the UE 3 communicates with the AF 41 in the application layer. The UE 3 may receive a cell identifier (e.g., PCI) of the candidate SCG cell from the AF 41. Additionally or alternatively, the UE 3 may receive from the AF 41 an identifier of the frequency band in which the candidate SCG cell is operating (e.g., NR-ARFCN).

In step 402, the UE 3 sends a PDU Session Establishment Request message to the 5GC 30 to request establishment of a new PDU session. Alternatively, the UE 3 may send a PDU Session Modification Request message to the 5GC 30 to request modification of an established PDU session. The NAS-SM message sent in step 402 includes one or both of the cell identifier and the frequency band identifier of the candidate SCG cell. Additionally or alternatively, the UE 3 may include a list of one or more frequency band identifiers in the NAS-SM message. In this case, the 5GC 30 (e.g., SMF 32 or AMF 31) or RAN 10 (e.g., RAN node 1) may select one or more specific cells (including the cell 12), each operating in any frequency band included in the list of frequency band identifiers.

The NAS-SM message sent in step 402 may include other information elements needed for the establishment or modification of the PDU session. More specifically, if the NAS-SM message is a PDU Session Establishment Request message, it may contain the PDU Session ID, Requested PDU Session Type, Requested Session and Service Continuity (SSC) mode, information about the lifetime of the PDU Session, and other information elements. On the other hand, if the NAS-SM message is a PDU Session Modification Request message, it may contain the PDU Session ID, Packet Filters, Requested QoS, information about the lifetime of the PDU Session, and other information elements. For example, the information about the lifetime of the PDU Session may be used as information for RAN optimization (e.g., Core Network assistance information for RAN optimization).

The AMF 31 receives the NAS-SM message of step 402 and forwards it to the SMF 32. In step 403, the SMF 32 interacts with NFs, including the PCF 34 and the UPF 33, to establish the new PDU session for the UE 3 or to modify the established PDU session of the UE 3.

More specifically, when the SMF 32 establishes the new PDU session for the UE 3, the SMF 32 may select a PSA UPF for that PDU session and request the UPF 33 to set up an N3 tunnel to route one or more QoS flows of that PDU session to the RAN node 2.

On the other hand, in the case of modifying an established PDU session, the SMF 32 may decide to insert a UL CL UPF and an additional PSA UPF into the UP path of the established PDU session of the UE 3. In this case, the SMF 32 may provide an N9 tunnel configuration for the insertion of the UL CL UPF and the additional PSA UPF, as well as a packet detection and forwarding rule, to the UPF 33.

In step 404, the 5GC 30 sends an N2 request to the RAN node 1. This N2 request may be a PDU SESSION RESOURCE SETUP REQUEST message or a PDU SESSION RESOURCE MODIFY REQUEST message. The N2 request includes one or both of the cell identifier and the frequency band identifier of the candidate SCG cell 12. The N2 request thereby requests the RAN node 1 to add the candidate SCG cell specified by the UE 3 (in this case, cell 12) as an SCG cell in DC for the UE 3. The N2 request further requests the RAN node 1 to set up or modify the UP path so that the user data belonging to the PDU session for the UE 3 is forwarded via the UP path including a radio connection of the SCG cell 12.

The AMF 31 (or SMF 32) may receive one or both of an Index to RAT/Frequency Selection Priority (RFSP index) and an Additional Radio Resource Management (RRM) Policy Index (ARPI) from the UDM. The RFSP index and ARPI are configured per UE, per PDU session, per QoS Flow Identifier (QFI), per Single Network Slice Selection Assistance Information (S-NSSAI), per Data Network (DN), or per Data Network Name (DNN) (per Access Point Name (APN)). A DNN is an identifier indicating a DN to which traffic of the UE 3 is to be routed (e.g., DN 50). An S-NSSAI is an identifier of a network slice. For example, the AMF 31 (or SMF 32) may set the RFSP index (and ARPI) corresponding to the S-NSSAI, DN, and APN to which the PDU session belongs to the N2 request. The AMF 31 can receive and manage the RFSP index (and ARPI) configured per UE, per PDU session, per QFI, per S-NSSAI, per DN, or per DNN (per APN) by invoking Nudm_SDM_Get to the UDM. Similarly, the SMF 32 can receive and manage the RFSP index (and ARPI) configured per UE, per PDU session, per QFI, per S-NSSAI, per DN, or per DNN (per APN) by invoking Nudm_SDM_Get to the UDM. The RFSP index is used, for example, by the RAN 10 (e.g., RAN node 1) to derive UE-specific cell reselection priorities to control camping in idle mode. Alternatively, the RFSP index may be used by the RAN 10 (e.g., RAN node 1) to decide to redirect a UE in connected mode (active mode) to a different frequency layer or a different RAT. The RAN 10 (e.g., RAN node 1) may select one or more specific cells (including the cell 12), each operating in any frequency band selected based on the RFSP index, as the SCG cell of DC for the UE 3. The ARPI is used by the RAN 10 (e.g., RAN node 1) to set priorities for the allocation of RAN resources to UEs.

More specifically, the SMF 32 sends N2 SM information and an N1 SM container to the AMF 31. The SMF 32 performs (or invokes) Namf_Communication_N1N2MessageTransfer. The N1 SM container contains a NAS-SM message to be sent to the UE 3. This NAS-SM message is a PDU Session Establishment Accept message in the case of PDU session establishment, or a PDU Session Modification Command message in the case of PDU session modification. Meanwhile, the N2 SM information contains information needed for the routing of the QoS flows to be added or updated (e.g., PDU Session ID, QoS Flow Identifier(s) (QFI(s)), and QoS Profile(s), CN Tunnel Info). The CN Tunnel Info indicates an N3 (GTP-U) tunnel endpoint of the UPF 33. The N2 SM information may further include one or any combination of the PCI, NR-ARFCN, RFSP index, and ARPI of the candidate SCG cell (cell 12) specified by the UE 3. The N2 SM information may explicitly indicate that dual connectivity is required. Alternatively, the SMF 32 may include, in Nsmf_PDUSession_UpdateSMContext Response or Namf_Communication_N1N2MessageTransfer, a cause indicating that dual connectivity or handover is required.

The RAN node 1 receives the N2 request from the AMF 31 and decides to add the cell 12 as an SCG cell in DC for the UE 3. In step 405, the RAN node 1 may make the UE 3, which is in Radio Resource Control (RRC)_CONNETED, perform an inter-frequency measurement. The RAN node 1 may create an inter-frequency measurement configuration to allow the UE 3 to measure the frequency band in which the cell 12 is operating. More specifically, the RAN node 1 may create a configuration (e.g., measurement gap) needed to measure the frequency band in which the cell 12 operates (e.g., FR2 band), taking into account the radio capabilities of the UE 3 (e.g., the number of Radio Frequency (RF) chains in the UE 3). The RAN node 1 may send to the UE 3 an RRC message containing the created configuration for inter-frequency measurement. The RRC message may be an RRC Reconfiguration message. If the RAN node 1 has already received measurement results from the UE 3, the measurement in step 405 may be skipped.

In step 406, the RAN node 1 performs a Secondary Node (SN) addition procedure to add the cell 12 as an SCG cell. More specifically, the RAN Node 1 sends a SN Addition Request message to the RAN Node 2. The RAN Node 2 sends a SN Addition Request Acknowledge message to the RAN Node 1. The SN Addition Request Acknowledge message contains an SN RRC message. The RAN node 1 then sends a Master Node (MN) RRC Reconfiguration message to the UE 3. The MN RRC Reconfiguration message contains the SN RRC message received from the RAN node 2 and contains the N1 SM container (PDU Session Establishment Accept or PDU Session Modification Command) received from the AMF 31.

Subsequently, with respect to the radio bearer in the SCG cell 12, the RAN node 1 (or the RAN node 2) updates the UP path to the 5GC (UPF 33) through a PDU session path update procedure. Specifically, in step 407, the RAN node 1 sends an N2 response to the AMF 31. This N2 response may be a PDU SESSION RESOURCE SETUP RESPONSE message or a PDU SESSION RESOURCE MODIFY RESPONSE message. The N2 response contains N2 SM information. This N2 SM information includes AN Tunnel Info that indicates an N3 (GTP-U) tunnel endpoint of the RAN Node 2, which is the SN of the DC. In step 408, the AMF 31 forwards the N2 SM information received from the RAN node 1 to the SMF 32, and the SMF 32 updates the UPF 33 based on that N2 SM information. This allows the UE 3 to perform DC using the cell 11 as the Master Cell Group (MCG) cell and the cell 12 as the SCG cell.

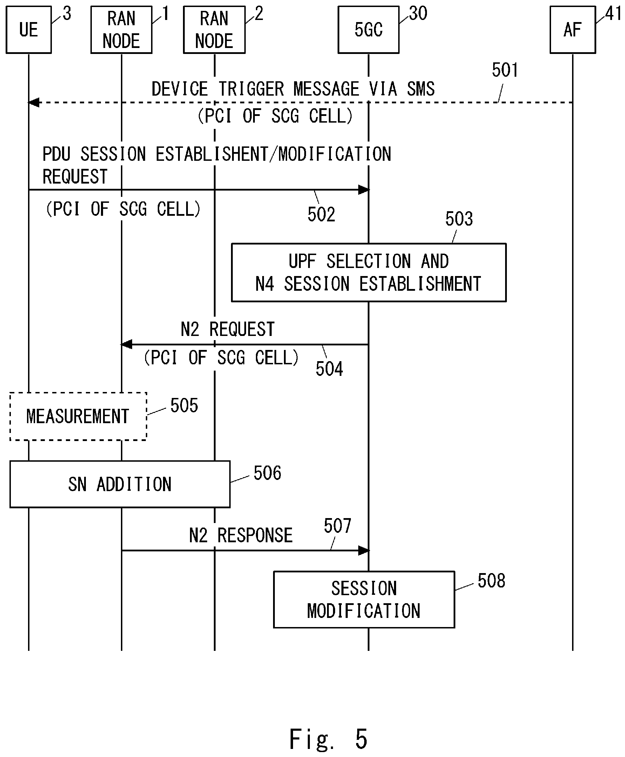

Figure 5 shows another example of the signaling in this embodiment. In step 501, the UE 3 receives a device trigger message from the AF 41. The device trigger message may include one or both of a cell identifier and a frequency band identifier of a candidate SCG cell. Alternatively, the device trigger message may include a request to establish or modify a PDU session. Steps 502-508 in Figure 5 are similar to steps 402-408 in Figure 4.

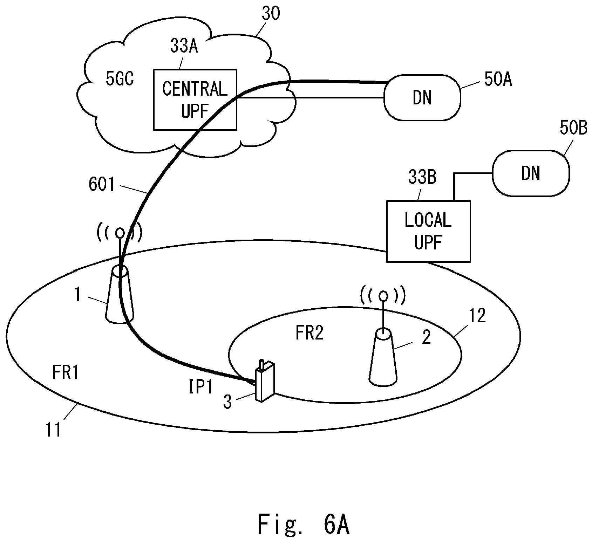

The following paragraphs describe specific examples of the change in the UP path with reference to Figures 6A to 6C. In the example shown in Figures 6A to 6C, the cell 11 may operate in the FR1 band (sub-6 GHz) and the cell 12 may operate in the FR2 band (e.g., 28 GHz). Figure 6A shows the UP path before the UP path change involving dual connectivity is performed. The UP path 601 shown in Figure 6A is used for the transfer of all the QoS flows belonging to the PDU session between a DN 50A and the UE 3. The UP path 601 includes a radio connection (DRB) in the cell 11 and an N3 tunnel between the RAN node 1 and a central UPF 33A. The IP address assigned to the UE3 in this PDU session is "IP1".

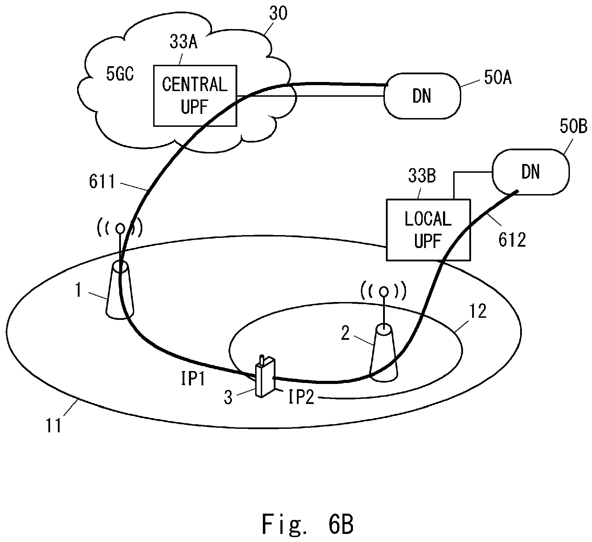

Figure 6B shows the UP path after a new PDU session has been established for the UE 3 and dual connectivity has been initiated using the cell 11 as the MCG cell and the cell 12 as the SCG cell. The UP path 611 shown in Figure 6B is the same as the UP path 601 in Figure 6A and is used to forward all the QoS flows belonging to the PDU session that has been established before the DC. On the other hand, the UP path 612 is used to forward all the QoS flows belonging to the newly established PDU session between a DN 50B and the UE 3. The UP path 612 includes a radio connection (DRB) in the SCG cell 12, and an N3 tunnel between the RAN node 2 and a local UPF 33B. The IP address assigned to the UE 3 in the new PDU session using the UP path 612 is "IP2". The local UPF 33B in Figure 6B can forward the uplink traffic of the QoS flow(s) of the newly established PDU session (IP2) to the DN 50B for local access via the UP path 612.

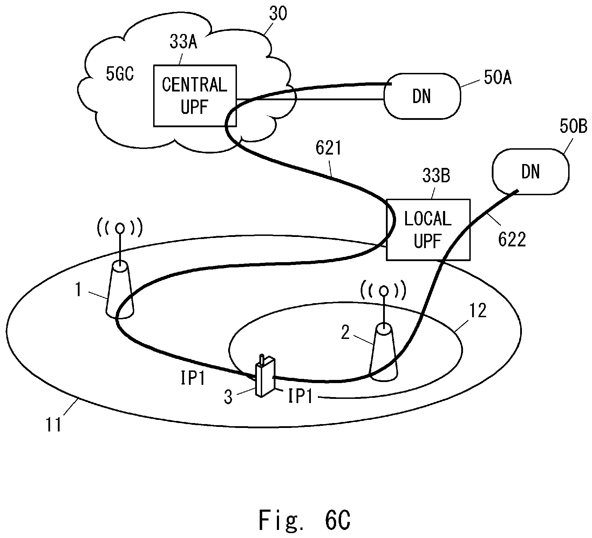

Figure 6C also shows the UP path after dual connectivity is initiated, but in Figure 6C the UP path of the PDU session that has been established before dual connectivity has been modified. The local UPF 33B in Figure 6C acts as UL CL and additional PSA. This allows the local UPF 33B to forward the uplink traffic of one or more newly added QoS flows to the DN 50B for local access via the UP path 622. In addition, the local UPF 33B can forward the uplink traffic of one or more QoS flows already configured before the DC to a DN 50A through the central UPF 33A via the UP path 621. In the Example of Figure 6C, the DN 50A and the DN 50B are the same DN. Besides, the PDU session is split at the local UPF 33B. The local UPF 33B forwards the downlink traffic of one or more QoS flows already configured before the DC to the RAN node 1 (MN) and forwards the downlink traffic of one or more newly added QoS flows to the RAN node 2 (SN).

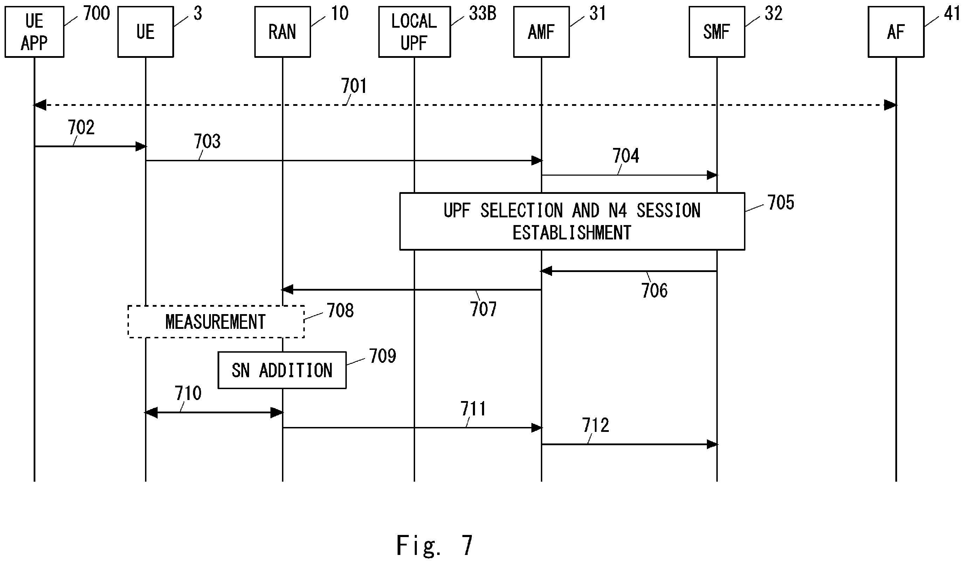

Figure 7 shows an example of signaling to initiate dual connectivity based on a request from the UE3. In step 701, the AF 41 communicates with one or more applications 700 (UE applications) running on the UE 3. For example, the AF 41 may communicate with the UE application 700 via an application layer over a PDU session between the DN 50 and the UE 3. The AF 41 may receive a request from the UE application 700 for a specific service (e.g., high volume content delivery, online gaming). The AF 41 may receive the current position of the UE 3 from the UE application 700. The UE application 700 may receive one or both of a cell identifier and a frequency band identifier of a candidate SCG cell from the AF 41.

In step 702, the UE application 700 requests the NAS layer of the UE 3 to establish a PDU session. This request may include a DNN or S-NSSAI or a combination thereof. This request may include one or both of the cell identifier and the frequency band identifier of the candidate SCG cell.

In step 703, the UE 3 sends an N1 NAS message containing a NAS-SM message to the AMF 31 via the RAN 10 (RAN node 1). The NAS-SM message is a PDU Session Establishment Request message. The NAS-SM message contains one or both of the cell identifier and the frequency band identifier of the candidate SCG cell.

In step 704, the AMF 31 forwards the NAS-SM message received from the UE 3 to the SMF 32. The AMF 31 may perform an Nsmf_PDUSession_CreateSMContext Request.

In step 705, the SMF 32 interacts with NFs, including the PCF 34 and the UPF 33, to establish a new PDU session for the UE 3. More specifically, the SMF 32 selects a PSA UPF for that PDU session and requests the UPF 33 to set up an N3 tunnel to route one or more QoS flows of that PDU session to the RAN node 2. The SMF 32 generates N2 SM information and an N1 SM container. The N1 SM container contains a PDU Session Establishment Accept message to be sent to the UE 3. Meanwhile, the N2 SM information contains information needed for the routing of the QoS flows to be added or updated (e.g., PDU Session ID, QoS Flow Identifier(s) (QFI(s)), and QoS Profile(s), CN Tunnel Info).

In step 706, the SMF 32 sends the N2 SM information and the N1 SM container to the AMF 31 in order to forward them to the RAN 10.
The SMF 32 may perform an
Namf_Communication_N1N2MessageTransfer.

In step 707, the AMF 31 generates an N2 request containing the N2 SM information and N1 SM container received from the SMF 32, and sends it to the RAN 10 (i.e., RAN node 1). The N2 request may be a PDU SESSION RESOURCE SETUP REQUEST message.

The messages of steps 701-704, 706, and 707 may indicate one or both of the cell identifier and the frequency band identifier of the candidate SCG cell. These are associated with the UE application 700. This makes it possible to supply the RAN 10 with RAN related information contained in the AF request from the AF 41.

Steps 708 and 709 are similar to steps 405 and 406 in Figure 2. The RAN node 1 receives the N2 request from the AMF 31 and decides to add the cell 12 as an SCG cell in DC for the UE 3. In step 708, the RAN node 1 may have the UE 3, which is in Radio Resource Control (RRC)_CONNETED, perform an inter-frequency measurement. If the RAN node 1 has already received measurement results from the UE 3, then the measurement in step 708 may be skipped. In step 709, the RAN node 1 communicates with the RAN node 2 and performs a Secondary Node (SN) addition procedure to add the cell 12 as a secondary cell (SCG cell).

In step 710, the RAN node 1 sends an MN RRC Reconfiguration message to the UE 3. This MN RRC Reconfiguration message contains an SN RRC message received from the RAN node 2 and the N1 SM container (PDU Session Establishment Accept) received from AMF 31. After that, the UE 3 sends an MN RRC Reconfiguration Complete message to the RAN node 1. The MN RRC Reconfiguration Complete message contains an SN RRC response message for the SN. The RAN node 1 (MN) indicates the successful completion of the reconfiguration procedure for the UE 3 to the RAN node 2 (SN) via an SN Reconfiguration Complete message, which contains the SN RRC response message.

In step 711, the RAN node 1 sends an N2 response to the AMF 31. The N2 response may be a PDU SESSION RESOURCE SETUP RESPONSE message. The N2 response contains N2 SM information. This N2 SM information includes AN Tunnel Info, which indicates an N3 (GTP-U) tunnel endpoint of the RAN node 2, which is the SN of the DC.

In step 712, the AMF 31 forwards the N2 SM information received from the RAN node 1 to the SMF 32, and the SMF 32 updates the UPF 33 based on that N2 SM information. AMF 31 may perform an Nsmf_PDUSession_UpdateSMContext Request.

### Second Embodiment

A configuration example of a radio communication network pertaining to this embodiment is similar to that described with reference to Figure 1. This embodiment provides signaling to initiate dual connectivity based on a request from the AF 41.

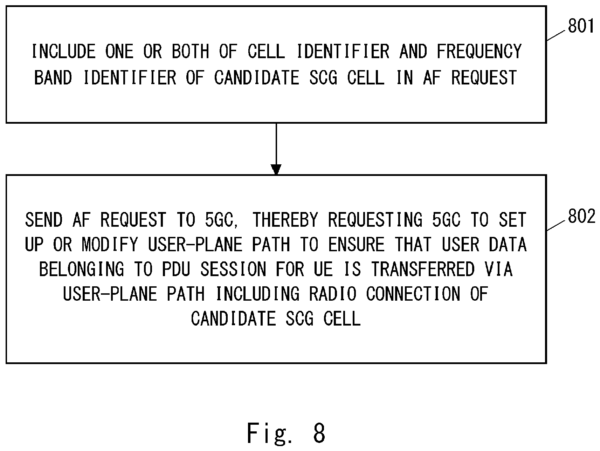

Figure 8 shows an example of the operation of the AF 41 according to this embodiment. In step 801, the AF 41 generates an AF request. The AF request includes one or both of a cell identifier of a candidate SCG cell of DC for the UE 3 and a frequency band identifier representing the frequency band in which the candidate SCG cell operates. The cell identifier may be a PCI. The frequency band identifier may be an NR-ARFCN.

The AF request in step 801 may include other information elements. More specifically, the AF request may include an identifier of the UE 3. The identifier of the UE 3 may be a Generic Public Subscription Identifier (GPSI), such as a Mobile Subscriber Integrated Services Digital Network Number (MSISDN) or an external identifier. The AF request may include an identifier of the PDU session (e.g., PDU Session ID). The AF request may include information (e.g., 5-tuple) to identify one or more QoS flows contained in the PDU session. The AF request may contain a combination of a DNN and an S-NSSAI. The AF request may include a list of one or more DN Access Identifiers (DNAIs). The DNAI(s) represent access locations to the DN.

In step 802, the AF 41 sends the generated AF request to the PCF 34, either directly or via the NEF 35. The AF request requests the 5GC 30 to modify an established PDU session for the UE 3 in such a way that the user data belonging to the established PDU session is transferred via an UP path that includes a radio connection of the candidate SCG cell. In this embodiment, the AF request causes the 5GC 30 to control the RAN 10 to add the candidate SCG cell as an SCG cell in DC for the UE 3.

The procedure in Figure 8 enables the 5GC 30 and RAN 10 to provide the UE 3 with a UP path containing a radio connection in a specific SCG cell of DC based on a request from the AF 41.

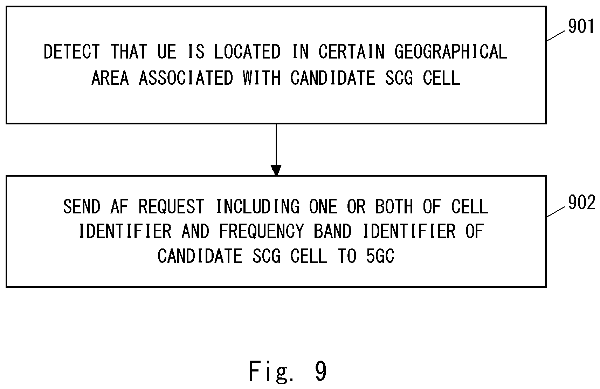

Figure 9 shows another example of the operation of the AF 41 according to this embodiment. In step 901, the AF 41 detects that the UE 3 is located in a certain geographical area associated with a candidate SCG cell (e.g., FR2 cell, cell 12). The certain geographical area may be an area that is larger than the coverage area of the candidate SCG cell. Alternatively, the certain geographical area may be an area that a user would definitely pass through before reaching the location of the candidate SCG cell. Thus, it can be said that the AF 41 determines that the UE 3 is approaching the candidate SCG cell.

In some implementations, the AF 41 may receive a report indicating the current location of the UE 3 from the UE 3 via application layer communication and determine whether the UE 3 is located in the certain geographical area based on the report. The UE 3 may, for example, send GPS location information to the AF 41.

In step 902, in response to the detection in step 901, the AF 41 sends to the 5GC 30 an AF request including one or both of a cell identifier and a frequency band identifier of the candidate SCG cell. This allows, for example, the AF 41 to request the 5GC 30 to prepare for dual connectivity using the candidate SCG cell prior to the UE 3 actually receiving radio signals of the candidate SCG cell. Such an operation can reduce the delay required for the UE 3 to transmit or receive user data in the candidate SCG cell when the UE 3 is able to receive radio signals from that cell.

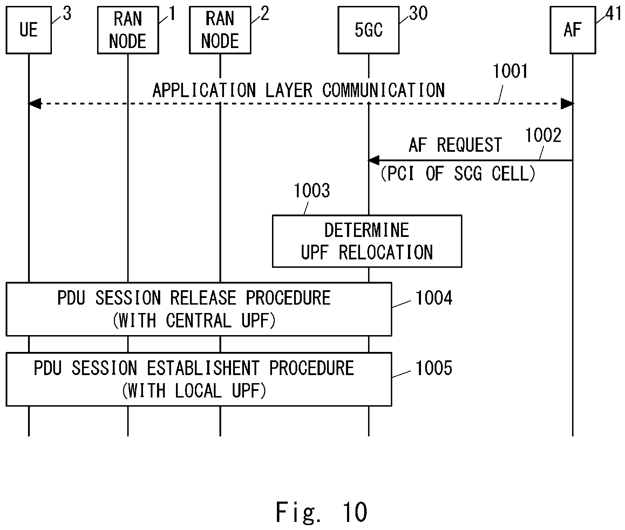

Figure 10 shows an example of signaling in the present embodiment. In the example of Figure 10, data mobility, known as SSC mode 2, is performed based on a request from the AF 41. In SSC mode 2, the SMF 32 performs the release of an existing PDU session and the establishment of a new PDU session to the same DN as the existing PDU session. In the establishment of the new PDU session, the SMF 32 can select a new PDU Session Anchor (PSA) UPF.

In step 1001, the AF 41 communicates with the UE 3 in the application layer. The AF 41 may receive a report of the current position of the UE 3 from the UE 3.

In step 1002, the AF 41 sends an AF request to the 5GC 30. Specifically, the AF 41 sends the AF request to the PCF 34 directly or via the NEF 35. The AF request requests the SMF 32 to relocate (or re-select) the PSA UPF according to SSC mode 2 in order to allow routing of user traffic to local access. The AF request includes one or any combination of a cell identifier (e.g., PCI), frequency band identifier (e.g., NR-ARFCN), RFSP index, and ARPI of the candidate SCG cell of DC for the UE 3. The AF request may also contain a DNAI or a Fully Qualified Domain Name (FQDN) to be used by the SMF 32 to select a local UPF. The AF request may include an identifier (e.g., GPSI) of the UE 3, PDU Session ID, information (e.g., 5-tuple) to identify a QoS flow, etc.

The PCF 34 receives the AF request directly or via the NEF 35, makes a policy decision based on the AF request, and determines that updated or new Session Management (SM) policy information needs to be sent to the SMF 32. The updated or new SM policy information may include the PCI or NR-ARFCN sent from the AF 41. The PCF 34 may issue an Npcf_SMPolicyControl_UpdateNotify request with the updated or new SM policy information.

In step 1003, the SMF 32 receives from the PCF 34 the SM policy information, which has been updated or generated based on the AF request. The SMF 32 determines that the PSA UPF for the established PDU session of the UE 3 needs to be changed according to SSC mode 2.

In step 1004, the SMF 32 initiates a PDU Session Release procedure to release the PDU session associated with the current PSA UPF (e.g., central UPF 33A). The SMF 32 includes, in a PDU Session Release Command message to be sent to the UE 3, the PDU Session ID of the PDU session to be released and a Cause indicating that a PDU Session re-establishment to the same DN is required.

In step 1005, in response to the reception of the PDU Session Release Command message, the UE 3 generates a new PDU Session ID and initiates a PDU session establishment procedure. The AMF 31 selects the SMF 32. The SMF 32 selects a new UPF (e.g., local UPF 33B) for the re-established PDU session in SSC mode 2. The steps performed within step 1005 after this are similar to steps 404-408 in Figure 4 or steps 706-712 in Figure 7. Step 1005 may be performed prior to step 1004.

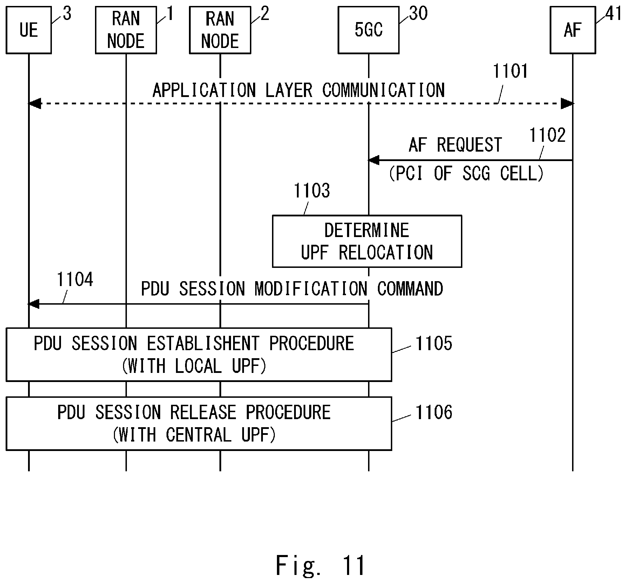

Figure 11 shows another example of signaling in the present embodiment. In the example of Figure 11, data mobility, known as SSC mode 3, is performed based on a request from the AF 41. In SSC mode 3, the SMF 32 establishes a new PDU session to the same DN as an existing PDU session before releasing the existing PDU session, and then releases the existing PDU session. Similar to SSC mode 2, in establishing the new PDU session, the SMF 32 can select a new PDU Session Anchor (PSA) UPF.

Steps 1101-1103 are similar to steps 1001-1003 in Figure 10. However, in step 1103, the SMF 32 determines that the PSA UPF for the established PDU session of the UE 3 needs to be modified according to SSC mode 3.

In step 1104, the SMF 32 sends a PDU Session Modification Command message to the UE 3. The PDU Session Modification Command message contains the PDU Session ID indicating the existing PDU session to be relocated and a Cause indicating that a PDU Session re-establishment to the same DN is required.

In step 1105, the UE 3 initiates a PDU session establishment procedure to the same DN in response to the PDU Session Modification Command of step 1104. Specifically, the UE 3 sends a PDU Session Establishment Request message. This PDU Session Establishment Request message contains a newly generated new PDU Session ID and the Old PDU Session ID indicating the existing PDU session to be relocated. The AMF 31 selects the same SMF 32 that is serving the Old PDU Session ID and performs an Nsmf_PDUSession_CreateSMContext Request. The AMF 31 includes both the (new) PDU Session ID and the Old PDU Session ID in the Nsmf_PDUSession_CreateSMContext Request. The SMF 32 selects a new UPF (e.g., local UPF 33B) for the new PDU session in SSC mode 3. The steps performed within step 1105 after this are the same as steps 404-408 in Figure 4 or steps 706-712 in Figure 7.

In step 1106, the UE 3 or the SMF 32 initiates a release procedure for the old PDU Session.

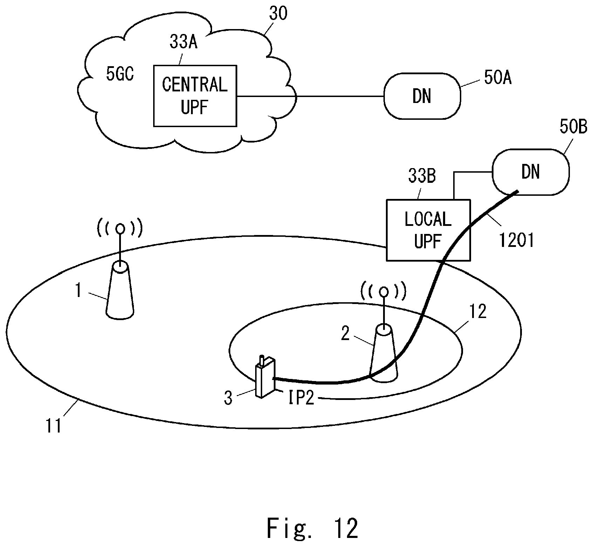

Figure 12 shows a UP path after the PDU Session Anchor is changed according to SSC mode 2 or SSC mode 3 and dual connectivity is initiated using the cell 11 as the MCG cell and the cell 12 as the SCG cell. The UP path 1201 shown in Figure 12 includes a radio connection (DRB) in the SCG cell 12, and an N3 tunnel between the RAN node 2 and the local UPF 33B.

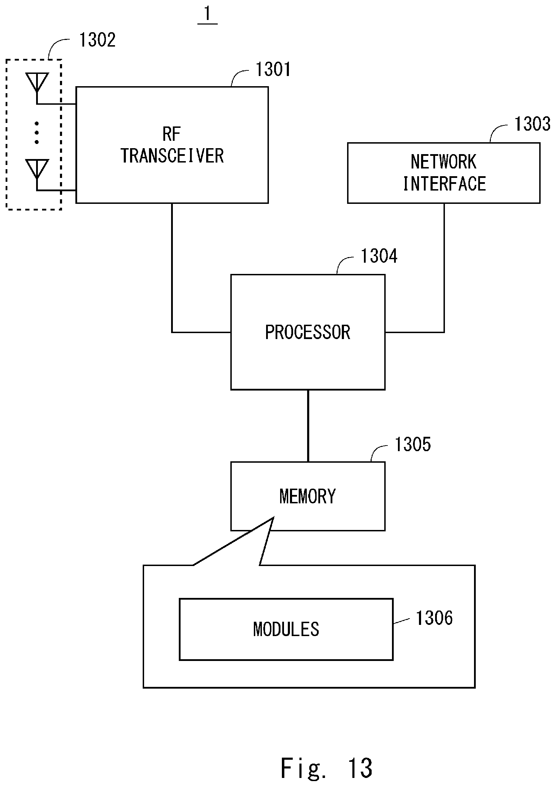

The following provides configuration examples of the RAN node 1, RAN node 2, UE 3, control-plane nodes (e.g., SMF 32) in the 5GC 30, and AF 41 according to the above-described embodiments. Figure 13 is a block diagram showing a configuration example of the RAN node 1 according to the above-described embodiments. The RAN node 2 may have a configuration similar to that shown in Figure 13. Referring to Figure 13, the RAN node 1 includes a Radio Frequency (RF) transceiver 1301, a network interface 1303, a processor 1304, and a memory 1305. The RF transceiver 1301 performs analog RF signal processing to communicate with UEs. The RF transceiver 1301 may include a plurality of transceivers. The RF transceiver 1301 is coupled to an antenna array 1302 and the processor 1304. The RF transceiver 1301 receives modulated symbol data from the processor 1304, generates a transmission RF signal, and supplies the transmission RF signal to the antenna array 1302. Further, the RF transceiver 1301 generates a baseband reception signal based on a reception RF signal received by the antenna array 1302 and supplies the baseband reception signal to the processor 1304. The RF transceiver 1301 may include an analog beamformer circuit for beam forming. The analog beamformer circuit includes, for example, a plurality of phase shifters and a plurality of power amplifiers.

The network interface 1303 is used to communicate with network nodes (e.g., other RAN nodes, AMF 31, and UPF 33). The network interface 1303 may include, for example, a network interface card (NIC) conforming to the IEEE 802.3 series.

The processor 1304 performs digital baseband signal processing (i.e., data-plane processing) and control-plane processing for radio communication. The processor 1304 may include a plurality of processors. The processor 1304 may include, for example, a modem processor (e.g., a Digital Signal Processor (DSP)) that performs digital baseband signal processing and a protocol stack processor (e.g., a Central Processing Unit (CPU) or a Micro Processing Unit (MPU)) that performs the control-plane processing.

The digital baseband signal processing by the processor 1304 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. The control-plane processing performed by the processor 1304 may include processing of Non-Access Stratum (NAS) messages, RRC messages, MAC CEs, and DCIs.

The processor 1304 may include a digital beamformer module for beam forming. The digital beamformer module may include a Multiple Input Multiple Output (MIMO) encoder and a pre-coder.

The memory 1305 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1305 may include a storage located apart from the processor 1304. In this case, the processor 1304 may access the memory 1305 via the network interface 1303 or an I/O interface (not illustrated).

The memory 1305 may store one or more software modules (computer programs) 1306 including instructions and data to perform processing by the RAN node 1 described in the above embodiments. In some implementations, the processor 1304 may be configured to load the software modules 1306 from the memory 1305 and execute the loaded software modules, thereby performing processing of the RAN node 1 described in the above embodiments.

When the RAN node 1 is a Central Unit (e.g., gNB-CU) in the C-RAN deployment, the RAN node 1 does not need to include the RF transceiver 1301 (and the antenna array 1302).

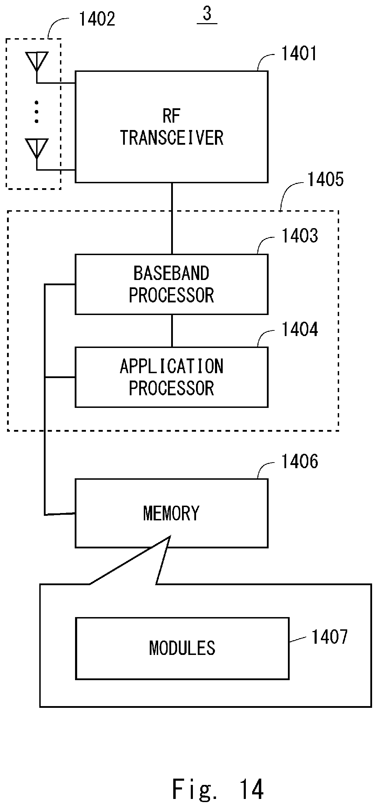

Figure 14 is a block diagram showing a configuration example of the UE 3. A Radio Frequency (RF) transceiver 1401 performs analog RF signal processing to communicate with NG-RAN nodes. The RF transceiver 1401 may include a plurality of transceivers. The analog RF signal processing performed by the RF transceiver 1401 includes frequency up-conversion, frequency down-conversion, and amplification. The RF transceiver 1401 is coupled to an antenna array 1402 and a baseband processor 1403. The RF transceiver 1401 receives modulated symbol data (or OFDM symbol data) from the baseband processor 1403, generates a transmission RF signal, and supplies the transmission RF signal to the antenna array 1402. Further, the RF transceiver 1401 generates a baseband reception signal based on a reception RF signal received by the antenna array 1402 and supplies the baseband reception signal to the baseband processor 1403. The RF transceiver 1401 may include an analog beamformer circuit for beam forming. The analog beamformer circuit includes, for example, a plurality of phase shifters and a plurality of power amplifiers.

The baseband processor 1403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1403 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1403 may include processing of Non-Access Stratum (NAS) protocols, Radio Resource Control (RRC) protocols, and MAC Control Elements (CEs).

The baseband processor 1403 may perform Multiple Input Multiple Output (MIMO) encoding and pre-coding for beam forming.

The baseband processor 1403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1404 described in the following.

The application processor 1404 is also referred to as a CPU, an MPU, a microprocessor, or a processor core. The application processor 1404 may include a plurality of processors (or processor cores). The application processor 1404 loads a system software program (Operating System (OS)) and various application programs (e.g., a call application, a WEB browser, a mailer, a camera operation application, and a music player application) from a memory 1406 or from another memory (not illustrated) and executes these programs, thereby providing various functions of the UE 3.

In some implementations, as represented by a dashed line (1405) in Figure 14, the baseband processor 1403 and the application processor 1404 may be integrated on a single chip. In other words, the baseband processor 1403 and the application processor 1404 may be implemented in a single System on Chip (SoC) device 1405. An SoC device may be referred to as a Large-Scale Integration (LSI) or a chipset.

The memory 1406 is a volatile memory, a non-volatile memory, or a combination thereof. The memory 1406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1406 may include, for example, an external memory device that can be accessed from the baseband processor 1403, the application processor 1404, and the SoC 1405. The memory 1406 may include an internal memory device that is integrated in the baseband processor 1403, the application processor 1404, or the SoC 1405. Further, the memory 1406 may include a memory in a Universal Integrated Circuit Card (UICC).

The memory 1406 may store one or more software modules (computer programs) 1407 including instructions and data to perform the processing by the UE 3 described in the above embodiments. In some implementations, the baseband processor 1403 or the application processor 1404 may load these software modules 1407 from the memory 1406 and execute the loaded software modules, thereby performing the processing of the UE 3 described in the above embodiments with reference to the drawings.

The control-plane processing and operations performed by the UE 3 described in the above embodiments can be achieved by elements other than the RF transceiver 1401 and the antenna array 1402, i.e., achieved by the memory 1406, which stores the software modules 1407, and one or both of the baseband processor 1403 and the application processor 1404.

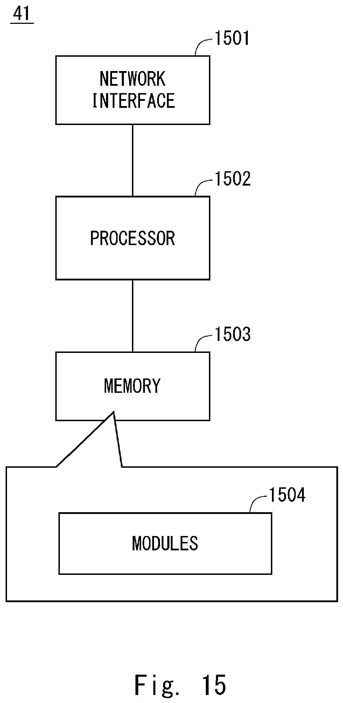

Figure 15 is a block diagram showing a configuration example of the AF 41. The control plane nodes within the 5GC 30 (e.g., AMF 31, SMF 32, PCF 34, and NEF 35) may also have a configuration similar to that shown in Figure 15. Referring to Figure 15, the AF 41 includes a network interface 1501, a processor 1502, and a memory 1503. The network interface 1501 is used to communicate, for example, with the DN 50 and with network functions (NFs) or nodes in the 5GC. The NFs or nodes in the 5GC include, for example, UDM, AUSF, SMF, and PCF. The network interface 1501 may include, for example, a network interface card (NIC) conforming to the IEEE 802.3 series.

The processor 1502 may be, for example, a microprocessor, a Micro Processing Unit (MPU), or a Central Processing Unit (CPU). The processor 1502 may include a plurality of processors.

The memory 1503 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1503 may include a storage located apart from the processor 1502. In this case, the processor 1502 may access the memory 1503 via the network interface 1501 or an I/O interface (not illustrated).

The memory 1503 may store one or more software modules (computer programs) 1504 including instructions and data to perform the processing of the AF 41 described in the above embodiments. In some implementations, the processor 1502 may be configured to load the one or more software modules 1504 from the memory 1503 and execute the loaded software modules, thereby performing the processing of the AF 41 described in the above embodiments.

As described above with reference to Figures 13, 14 and 15, each of the processors that the RAN node 1, RAN node 2, control-plane nodes (e.g., SMF 32) in the 5GC 30, and AF 41 according to the above embodiments include executes one or more programs including instructions for causing a computer to execute an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

### Other Embodiments

Each of the above embodiments may be used individually, or whole or a part of the embodiments may be appropriately combined with one another.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

A User Equipment (UE) comprising:
at least one memory; and
at least one processor coupled to the at least one memory and configured to:
   include, in a Non-Access Stratum (NAS) message requesting establishment or modification of a protocol data unit (PDU) session, one or both of a first identifier representing a candidate secondary cell for dual connectivity and a second identifier representing a frequency band in which the candidate secondary cell operates; and
   send the NAS message to a core network via a radio access network (RAN),
wherein the NAS message causes the core network to set up or modify a user plane path to ensure that user data belonging to the PDU session is transferred through the user plane path that includes a radio connection in the candidate secondary cell.

### (Supplementary Note 2)

The UE according to Supplementary Note 1, wherein the NAS message causes the core network to control the RAN to add the candidate secondary cell as a secondary cell of dual connectivity for the UE.

### (Supplementary Note 3)

The UE according to Supplementary Note 1 or 2, wherein the at least one processor is configured to receive a control message including one or both of the first identifier and the second identifier from an Application Function (AF) via communication in an application layer or via a device trigger.

### (Supplementary Note 4)

The UE according to Supplementary Note 3, wherein the control message is sent in response to a detection by the AF that the UE is located in a certain geographical area associated with the candidate secondary cell.

### (Supplementary Note 5)

The UE according to any one of Supplementary Notes 1 to 3, wherein the at least one processor is configured to send the NAS message in response to a detection by the UE that the UE is located in a certain geographical area associated with the candidate secondary cell.

### (Supplementary Note 6)

The UE according to any one of Supplementary Notes 1 to 5, wherein the user data is one or more Quality of Service (QoS) flows included in the PDU session.

### (Supplementary Note 7)

The UE according to any one of Supplementary Notes 1 to 6, wherein
the radio connection is a data radio bearer, and
the user plane path includes the data radio bearer and a tunnel between the radio access network and a User Plane Function (UPF) in the core network.

### (Supplementary Note 8)

The UE according to any one of Supplementary Notes 1 to 7, wherein the NAS message is a PDU Session Establishment Request message or a PDU Session Modification Request message.

### (Supplementary Note 9)

An Application Function (AF) apparatus comprising:
at least one memory; and
at least one processor coupled to the at least one memory and configured to:
   include, in a first message, one or both of a first identifier representing a candidate secondary cell for dual connectivity for a User Equipment (UE) and a second identifier representing a frequency band in which the candidate secondary cell operates; and
   send the first message to a core network,
wherein the first message causes the core network to set up or modify a user plane path to ensure that user data belonging to a protocol data unit (PDU) session for the UE is transferred through the user plane path that includes a radio connection in the candidate secondary cell.

### (Supplementary Note 10)

The AF apparatus according to Supplementary Note 9, wherein the first message causes the core network to control a radio access network (RAN) to add the candidate secondary cell as a secondary cell for dual connectivity for the UE.

### (Supplementary Note 11)

The AF apparatus according to Supplementary Note 9 or 10, wherein the at least one processor is configured to determine whether the UE is located in a certain geographical area associated with the candidate secondary cell, and to send the first message to the core network in response to determining that the UE is located in the geographical area.

### (Supplementary Note 12)

The AF apparatus according to Supplementary Note 11, wherein the at least one processor is configured to determine whether the UE is located in the certain geographical area based on a report of location information from the UE via communication in an application layer.

### (Supplementary Note 13)

The AF apparatus according to any one of Supplementary Notes 9 to 12, wherein the user data is one or more Quality of Service (QoS) flows included in the PDU session.

### (Supplementary Note 14)

The AF apparatus according to any one of Supplementary Notes 9 to 13, wherein
the radio connection is a data radio bearer, and
the user plane path includes the data radio bearer and a tunnel between a radio access network and a User Plane Function (UPF) in the core network.

### (Supplementary Note 15)

A Session Management Function (SMF) apparatus comprising:
at least one memory; and
at least one processor coupled to the at least one memory and configured to:
   receive from a Policy Control Function (PCF) a second message that is based on a request from an Application Function (AF); and
   in response to the second message from the PCF, request a radio access network (RAN) via an Access and Mobility management Function (AMF) to set up or modify a user plane path in such a way that user data belonging to a protocol data unit (PDU) session for a User Equipment (UE) is transferred via the user plane path including a radio connection of a secondary cell in dual connectivity.

### (Supplementary Note 16)

The SMF apparatus according to Supplementary Note 15, wherein the at least one processor is configured to send Session Management (SM) information, including one or both of a first identifier representing the secondary cell and a second identifier representing a frequency band in which the secondary cell operates, to the RAN via the AMF to request modification of the user plane path.

### (Supplementary Note 17)

The SMF apparatus according to Supplementary Note 16, wherein the at least one processor is configured to receive one or both of the first identifier and the second identifier from the AF via the PCF.

### (Supplementary Note 18)

A method performed by a User Equipment (UE), the method comprising:
including, in a Non-Access Stratum (NAS) message requesting establishment or modification of a protocol data unit (PDU) session, one or both of a first identifier representing a candidate secondary cell for dual connectivity and a second identifier representing a frequency band in which the candidate secondary cell operates; and
sending the NAS message to a core network via a radio access network (RAN),
wherein the NAS message causes the core network to set up or modify a user plane path to ensure that user data belonging to the PDU session is transferred through the user plane path that includes a radio connection in the candidate secondary cell.

### (Supplementary Note 19)

A method performed by an Application Function (AF) apparatus, the method comprising:
including, in a first message, one or both of a first identifier representing a candidate secondary cell for dual connectivity for a User Equipment (UE) and a second identifier representing a frequency band in which the candidate secondary cell operates; and
sending the first message to a core network,
wherein the first message causes the core network to set up or modify a user plane path to ensure that user data belonging to a protocol data unit (PDU) session for the UE is transferred through the user plane path that includes a radio connection in the candidate secondary cell.

### (Supplementary Note 20)

A method performed by a Session Management Function (SMF) apparatus, the method comprising:
receiving from a Policy Control Function (PCF) a second message that is based on a request from an Application Function (AF); and
in response to the second message from the PCF, requesting a radio access network (RAN) via an Access and Mobility management Function (AMF) to set up or modify a user plane path in such a way that user data belonging to a protocol data unit (PDU) session for a User Equipment (UE) is transferred via the user plane path including a radio connection of a secondary cell in dual connectivity.

This application is based upon and claims the benefit of priority from Japanese Patent Application No. 2020-078449, filed on April 27, 2020, the disclosure of which is incorporated herein in its entirety by reference.

### Reference Signs List

- 1: RAN Node
- 2: RAN Node
- 3: UE
- 10: RAN
- 11, 12: Cell
- 30: 5GC
- 31: AMF
- 32: SMF
- 33, 33A, 33B: UPF
- 34: PCF
- 3 5: NEF
- 41: AF
- 50, 50A, 50B: DN
- 1305: Memory
- 1306: Modules
- 1403: Baseband Processor
- 1404: Application Processor
- 1407: Modules
- 1503: Memory
- 1504: Modules

## Claims

1. A User Equipment (UE) comprising:
at least one memory; and
at least one processor coupled to the at least one memory and configured to:
include, in a Non-Access Stratum (NAS) message requesting establishment or modification of a protocol data unit (PDU) session, one or both of a first identifier representing a candidate secondary cell for dual connectivity and a second identifier representing a frequency band in which the candidate secondary cell operates; and
send the NAS message to a core network via a radio access network (RAN),
wherein the NAS message causes the core network to set up or modify a user plane path to ensure that user data belonging to the PDU session is transferred through the user plane path that includes a radio connection in the candidate secondary cell.

2. The UE according to claim 1, wherein the NAS message causes the core network to control the RAN to add the candidate secondary cell as a secondary cell of dual connectivity for the UE.

3. The UE according to claim 1 or 2, wherein the at least one processor is configured to receive a control message including one or both of the first identifier and the second identifier from an Application Function (AF) via communication in an application layer or via a device trigger.

4. The UE according to claim 3, wherein the control message is sent in response to a detection by the AF that the UE is located in a certain geographical area associated with the candidate secondary cell.

5. The UE according to any one of claims 1 to 3, wherein the at least one processor is configured to send the NAS message in response to a detection by the UE that the UE is located in a certain geographical area associated with the candidate secondary cell.

6. The UE according to any one of claims 1 to 5, wherein the user data is one or more Quality of Service (QoS) flows included in the PDU session.

7. The UE according to any one of claims 1 to 6, wherein
the radio connection is a data radio bearer, and
the user plane path includes the data radio bearer and a tunnel between the radio access network and a User Plane Function (UPF) in the core network.

8. The UE according to any one of claims 1 to 7, wherein the NAS message is a PDU Session Establishment Request message or a PDU Session Modification Request message.

9. An Application Function (AF) apparatus comprising:
at least one memory; and
at least one processor coupled to the at least one memory and configured to:
include, in a first message, one or both of a first identifier representing a candidate secondary cell for dual connectivity for a User Equipment (UE) and a second identifier representing a frequency band in which the candidate secondary cell operates; and
send the first message to a core network,
wherein the first message causes the core network to set up or modify a user plane path to ensure that user data belonging to a protocol data unit (PDU) session for the UE is transferred through the user plane path that includes a radio connection in the candidate secondary cell.

10. The AF apparatus according to claim 9, wherein the first message causes the core network to control a radio access network (RAN) to add the candidate secondary cell as a secondary cell for dual connectivity for the UE.

11. The AF apparatus according to claim 9 or 10, wherein the at least one processor is configured to determine whether the UE is located in a certain geographical area associated with the candidate secondary cell, and to send the first message to the core network in response to determining that the UE is located in the geographical area.

12. The AF apparatus according to claim 11, wherein the at least one processor is configured to determine whether the UE is located in the certain geographical area based on a report of location information from the UE via communication in an application layer.

13. The AF apparatus according to any one of claims 9 to 12,
wherein the user data is one or more Quality of Service (QoS) flows included in the PDU session.

14. The AF apparatus according to any one of claims 9 to 13,
wherein
the radio connection is a data radio bearer, and
the user plane path includes the data radio bearer and a tunnel between a radio access network and a User Plane Function (UPF) in the core network.

15. A Session Management Function (SMF) apparatus comprising:
at least one memory; and
at least one processor coupled to the at least one memory and configured to:
receive from a Policy Control Function (PCF) a second message that is based on a request from an Application Function (AF); and
in response to the second message from the PCF, request a radio access network (RAN) via an Access and Mobility management Function (AMF) to set up or modify a user plane path in such a way that user data belonging to a protocol data unit (PDU) session for a User Equipment (UE) is transferred via the user plane path including a radio connection of a secondary cell in dual connectivity.

16. The SMF apparatus according to claim 15, wherein the at least one processor is configured to send Session Management (SM) information, including one or both of a first identifier representing the secondary cell and a second identifier representing a frequency band in which the secondary cell operates, to the RAN via the AMF to request modification of the user plane path.

17. The SMF apparatus according to claim 16, wherein the at least one processor is configured to receive one or both of the first identifier and the second identifier from the AF via the PCF.

18. A method performed by a User Equipment (UE), the method comprising:
including, in a Non-Access Stratum (NAS) message requesting establishment or modification of a protocol data unit (PDU) session, one or both of a first identifier representing a candidate secondary cell for dual connectivity and a second identifier representing a frequency band in which the candidate secondary cell operates; and
sending the NAS message to a core network via a radio access network (RAN),
wherein the NAS message causes the core network to set up or modify a user plane path to ensure that user data belonging to the PDU session is transferred through the user plane path that includes a radio connection in the candidate secondary cell.

19. A method performed by an Application Function (AF) apparatus, the method comprising:
including, in a first message, one or both of a first identifier representing a candidate secondary cell for dual connectivity for a User Equipment (UE) and a second identifier representing a frequency band in which the candidate secondary cell operates; and
sending the first message to a core network,
wherein the first message causes the core network to set up or modify a user plane path to ensure that user data belonging to a protocol data unit (PDU) session for the UE is transferred through the user plane path that includes a radio connection in the candidate secondary cell.

20. A method performed by a Session Management Function (SMF) apparatus, the method comprising:
receiving from a Policy Control Function (PCF) a second message that is based on a request from an Application Function (AF); and
in response to the second message from the PCF, requesting a radio access network (RAN) via an Access and Mobility management Function (AMF) to set up or modify a user plane path in such a way that user data belonging to a protocol data unit (PDU) session for a User Equipment (UE) is transferred via the user plane path including a radio connection of a secondary cell in dual connectivity.
